# FASCICULE DE BREVET EUROPEEN

(11) **EP 2 538 258 B1**
(45) Date de publication et mention de la délivrance du brevet: **11.04.2018**
(21) Numéro de dépôt: 12173028.7
(22) Date de dépôt: 21.06.2012
(51) Int. Cl.: G02B 7/02, G02B 27/30, G01C 15/00, G01B 11/26

(54) **Procédé de montage d'une lentille de collimation dans un dispositif laser**
Verfahren zur Montage einer Bündelungslinse in einer Laservorrichtung
Method for mounting a collimation lens in a laser device

(30) Priorité: 23.06.2011 FR 1155542
(43) Date de publication de la demande: 26.12.2012
(73) Titulaire: Leica Geosystems AG, 9435 Heerbrugg (CH)
(72) Inventeur: Chiorean, Mircea, 78600 Le Mesnil Le Roi (FR); Persin, Didier, 78400 Chatou (FR); Daret, Dominique, 92130 Issy Les Moulineaux (FR); Richardson, Andrew, 92600 Asnière sur seine (FR)
(74) Mandataire: Beaudouin-Lafon, Emmanuel

(56) Documents cités:
- DE-A1- 19 815 620
- US-A1- 2006 092 997
- US-A1- 2008 066 329
- US-A1- 2008 093 390
- US-B2- 6 928 100

## Description

L'invention concerne un appareil tel qu'un niveau électronique à rayon laser, c'est-à-dire un appareil générant un rayon laser orienté verticalement et/ou horizontalement.

Un niveau électronique à rayon laser est connu par le document US2008/0066329.

### ARRIERE PLAN DE L'INVENTION

Un tel appareil est typiquement utilisé dans le domaine de la construction de bâtiment. Il comprend un boîtier dans lequel est monté un corps ayant une tête dépassant de la face supérieure du boîtier pour émettre un rayon laser horizontal.

L'ensemble intègre des moyens motorisés pour ajuster l'orientation du corps par rapport au boîtier, le corps étant équipé d'une carte électronique de mesure agencée pour déterminer de manière précise s'il est horizontal ou non.

En pratique, l'appareil est installé à un premier emplacement, à une hauteur prédéterminée, en étant par exemple fixé à un mur ou bien porté par un trépied posé sur le sol. Lorsque l'appareil est mis en service, une première procédure est d'abord enclenchée pour orienter le corps par rapport à l'horizontale, grâce aux moyens motorisés.

Une fois que cette procédure d'orientation est terminée, la tête du rayon laser émet un rayon laser qui est horizontal. Ce rayon laser se projette alors par exemple sur un autre mur du bâtiment en construction, ce qui permet de connaître la hauteur prédéterminée à un second emplacement.

Avantageusement, l'appareil intègre un dispositif optique grâce auquel le rayon laser horizontal qu'il génère au niveau de sa tête tourne autour d'un axe vertical. Lorsque l'ensemble est installé à l'intérieur d'une pièce en construction, il peut ainsi projeter une ligne horizontale située à une hauteur prédéterminée sur les différents murs de cette pièce.

Dans un tel appareil, le rayon laser est produit par un collimateur rigidement solidarisé à la carte de mesure d'horizontalité, pour que le rayon laser soit émis selon la verticale. Ce collimateur comporte un organe de support tubulaire portant une diode laser à l'une de ses extrémités, et une lentille de collimation à son autre extrémité.

La tête du corps principal comporte en outre un prisme tournant autour d'un axe qui est vertical lorsque la carte détecte qu'elle est horizontale, pour réfléchir perpendiculairement le rayon laser émis verticalement par le collimateur.

Le collimateur comporte des moyens d'ajustement de la distance séparant la lentille de collimation de la diode laser, du fait que cette distance conditionne la focalisation du rayon laser.

Par ailleurs des moyens additionnels sont prévus pour ajuster l'orientation du collimateur par rapport à la carte de mesure d'horizontalité, de manière à ce que le rayon laser sortant de la lentille soit orienté selon la verticale lorsque la carte détecte qu'elle est horizontale.

Dans le processus de fabrication d'un tel appareil, le montage de la lentille est assuré en la fixant à l'organe de support et en ajustant la distance séparant cette lentille de la diode laser pour obtenir la focalisation souhaitée.

L'ajustement de l'orientation du rayon laser est assuré en plaçant le corps d'appareil dans un berceau et en l'orientant de telle manière que la carte détecte qu'elle est horizontale. Un opérateur agit alors sur les organes de réglage pour ajuster l'orientation du collimateur par rapport à la carte, jusqu'à ce que le rayon laser sortant du collimateur soit orienté selon la verticale.

### OBJET DE L'INVENTION

Le but de l'invention est de proposer une solution d'ajustement et de montage de la lentille qui soit simple et peu onéreuse.

### RESUME DE L'INVENTION

A cet effet, l'invention a pour objet un procédé de montage sur un organe de support selon la revendication 1. Avec cette solution, la lentille ou une embase portant la diode peut être fixée par simple collage tout en ayant sa position ajustée par des moyens automatisés, ce qui permet de réduire significativement le coût de fabrication du dispositif.

L'invention concerne également un procédé ainsi défini, dans lequel l'opération d'ajustement de la position de l'élément comporte une première étape d'ajustement de la distance séparant la lentille de la diode qui est asservie sur la focalisation du rayon laser, suivie par une seconde étape d'ajustement de la position de l'élément dans un plan normal à la direction prédéterminée qui est asservie sur l'orientation du rayon laser.

L'invention concerne également un procédé ainsi défini, dans lequel l'élément est fixé à une extrémité tubulaire de l'organe support, cette extrémité tubulaire ayant un diamètre sensiblement supérieur au diamètre de l'élément, la colle étant appliquée pour s'étendre depuis le pourtour de l'élément jusqu'au bord circulaire de l'extrémité tubulaire de l'organe de support.

L'invention concerne également un procédé ainsi défini, dans lequel l'opération d'application colle est assurée avec un dispositif automatisé comportant une seringue ayant son poussoir asservi en déplacement.

L'invention concerne également un procédé ainsi défini, dans lequel l'opération de séchage de la colle est réalisée en dirigeant vers la colle préalablement appliquées un rayonnement lumineux pour la sécher ou la polymériser.

L'invention concerne également un procédé ainsi défini, dans lequel la colle est appliquée sous forme de gouttes, pour relier le pourtour de l'élément à l'organe de support, au niveau d'au moins trois zones distinctes.

L'invention concerne également un dispositif selon la revendication 6.

### BREVE DESCRIPTION DES FIGURES

La figure 1 est une représentation schématique montrant l'agencement des composants du corps principal d'un niveau laser ;
La figure 2 montre l'agencement relatif de l'organe de support et de la diode laser du corps principal ainsi que la lentille avant son montage ;
La figure 3 est une représentation schématique d'une étape d'ajustement de la distance séparant la lentille de la diode pour obtenir une focalisation optimale dans le procédé selon l'invention ;
La figure 4 est une représentation schématique d'une étape d'ajustement de l'emplacement de la lentille dans un plan normal à la direction prédéterminée dans le procédé selon l'invention ;
La figure 5 montre la lentille ajustée en position et fixée à l'organe de support conformément à l'invention.

### DESCRIPTION DETAILLEE DE L'INVENTION

L'invention est basée sur le constat selon lequel la position de la lentille par rapport à la diode laser conditionne non seulement la focalisation, mais également l'orientation du rayon laser sortant de cette lentille.

Autrement dit, la distance de la lentille à la diode conditionne la focalisation, mais de plus, il apparaît que la position de la lentille dans un plan sensiblement normal à la direction d'émission du rayon laser par la diode conditionne l'orientation du rayon laser sortant de la lentille : décaler latéralement la lentille par rapport au laser permet d'ajuster l'orientation du rayon laser.

Partant de ce constat, l'objet de l'invention est de fixer la lentille à faible distance de l'organe de support au moyen de gouttes de colle, pour disposer de la mobilité nécessaire à l'ajustement de la position de la lentille tout en utilisant un procédé de fixation simple et peu onéreux.

L'ajustement de la position de la lentille est ainsi assuré par rapport à l'organe support avant fixation à cet organe, au lieu d'être réalisé en fixant d'abord la lentille à l'organe support avant d'ajuster sa position.

L'invention s'applique notamment à un niveau laser comportant un boîtier dans lequel est installé un corps principal ayant une tête dépassant de ce boîtier, ce corps principal étant mobile par rapport au boîtier pour ajuster son orientation par rapport à l'horizontale.

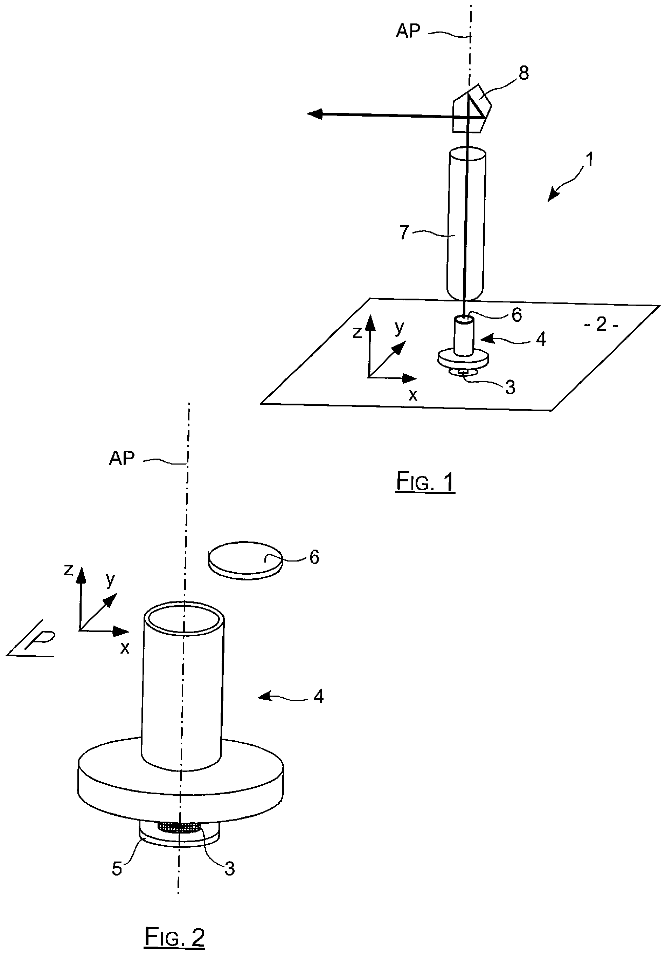

Ce corps principal qui est représenté de manière schématique et partielle en figure 1, en y étant repéré par 1, comporte une carte de mesure d'horizontalité 2, une diode laser repérée par 3, ainsi qu'un organe de support 4 situé au dessus de la diode, et une lentille de collimation 6.

La diode laser 3 est fixée à l'organe support 4, tout en étant reliée à un circuit imprimé de pilotage de cette diode, qui est repéré par 5, la lentille de collimation 6 est quant à elle fixée à l'extrémité supérieure de l'organe support 4. L'ensemble formé par l'organe support 4, la lentille 6 et la diode 3 le circuit imprimé 5 constitue le collimateur de l'appareil.

Une portion tubulaire 7 est montée au dessus de l'organe de support 4, ainsi qu'un prisme rotatif 8 situé au niveau de l'extrémité supérieure de la portion tubulaire 6, ce prisme rotatif étant agencé pour tourner autour d'un axe parallèle à l'axe du rayon laser issu de la lentille de collimation montée.

En pratique, l'organe support 4 généralement tubulaire peut faire partie d'un châssis du corps principal auquel la carte de mesure d'horizontalité 2 est rigidement fixée.

La source lumineuse de la diode laser émet quant à elle un rayonnement qui est légèrement oblique par rapport à la verticale lorsque la carte 2 détecte qu'elle est horizontale.

Concrètement, l'incertitude d'orientation de la source lumineuse de la diode est due aux aléas de fabrication et cette diode, à sa fixation à la partie inférieure de l'organe support 4, et au montage des composants de mesure d'horizontalité équipant la carte 2.

Le rayonnement généré par la diode 3, qui est légèrement incliné par rapport à la verticale, traverse la lentille 6 pour être focalisé et pour corriger son orientation, de sorte que le rayonnement sortant de la lentille est focalisé et orienté selon la verticale.

Ce rayonnement vertical atteint ensuite le prisme 8 pour être réfléchi perpendiculairement par le prisme 8, de sorte que le rayon laser réfléchi s'étend horizontalement. Complémentairement, le prisme 8 tourne pour générer un rayon tournant s'étendant dans un plan horizontal.

Le montage du système consiste à monter dans un berceau d'une machine spéciale l'ensemble formé par la carte de mesure d'horizontalité 2 avec l'organe support 4 portant la diode 3, ces composants étant rigidement solidarisés les uns aux autres. Cette installation est réalisée en ajustant l'orientation du système, jusqu'à ce que la carte 2 détecte qu'elle est horizontale.

Dans les figures, on a représenté un repère orthogonal x y z, lié par exemple à la machine, dont l'axe z correspond à la verticale, et dont les axes x et y sont horizontaux. L'axe z représente ici une référence verticale, c'est-à-dire qu'il s'étend par exemple parallèlement à un fil à plomb.

La lentille 6 est ensuite saisie par un organe de préhension qui est déplacé par des moyens mécaniques, selon les trois axes x y et z, et la lentille 6 est déplacée depuis une position initiale correspondant à celle de la figure 2, jusqu'à une position par défaut qui est proche de sa position d'ajustement, la lentille étant alors orientée parallèlement à un plan P horizontal, c'est-à-dire parallèle aux axes x et y.

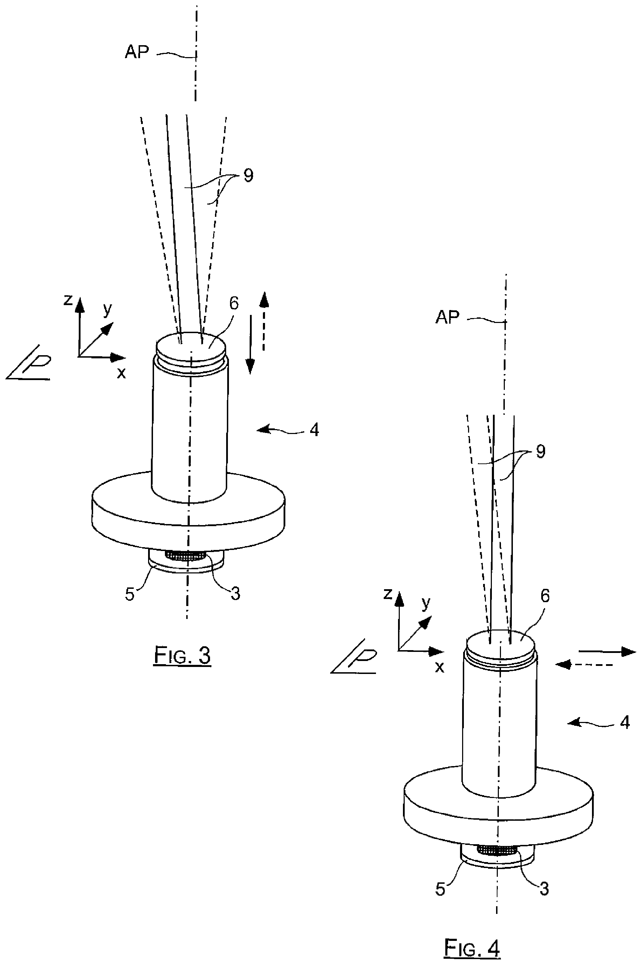

La diode 3 est ensuite activée pour générer un rayonnement lumineux. Les moyens mécaniques de déplacement de la lentille 6, qui sont asservis sur la focalisation du rayon laser sortant de la lentille, sont alors pilotés pour déplacer la lentille en translation verticalement selon l'axe z jusqu'à atteindre la cote correspondant à la meilleure focalisation de ce rayon laser, comme illustré schématiquement à la figure 3.

Une fois que la focalisation a été ajustée, la lentille 6 est déplacée en translation selon l'axe x par les moyens asservis, comme illustré sur la figure 4, pour corriger l'orientation du rayon laser 9 autour de l'axe y, jusqu'à ce que ce rayon laser s'étende dans un plan parallèle aux axes y et z.

Les moyens asservis sont ensuite pilotés pour déplacer la lentille 6 en translation selon l'axe y, pour ajuster l'orientation du rayon laser 9 autour de l'axe x, jusqu'à ce que le rayon laser s'étende dans un plan parallèle aux axes x et z.

A ce stade, le rayon laser est orienté selon un axe prédéterminé, noté AP, qui est un axe parallèle à la verticale z, et passant approximativement par le centre de la lentille de collimation.

Il est à noter qu'il n'est pas nécessaire que la lentille soit déplacée dans un plan parfaitement horizontal pour ajuster l'orientation du rayon laser 9 selon la direction AP : les axes de déplacement de la lentille 6 peuvent être sensiblement inclinés par rapport aux axes x et y.

D'une manière générale, l'asservissement des moyens mécaniques peut être assuré en utilisant une caméra orientée vers un écran sur lequel le rayon laser est projeté. Des moyens de traitement numérique déterminent alors de façon automatisée le diamètre de la tâche que forme le rayon laser sur cet écran, ce qui correspond à sa focalisation.

Ces moyens de traitement déterminent également la position de la tâche sur l'écran, selon deux axes perpendiculaires X et Y, et par rapport à une position cible qui est atteinte lorsque le rayon 9 est aligné avec l'axe AP.

Lorsque la lentille a été placée par les moyens asservis à sa position optimale au regard de la focalisation et de l'orientation du rayon laser, cette position ajustée est mémorisée par le dispositif. Dans cette position ajustée, la lentille est située à une faible distance de l'organe de support, et les moyens asservis sont pilotés pour maintenir la lentille à cette position durant l'application et le séchage de points de colle assurant la fixation de la lentille à l'organe support 4.

Pour réduire le risque que les points de colle ne glissent entre la lentille et le bord supérieur de l'organe support 4, il est possible de piloter les moyens asservis pour rapprocher la lentille de l'organe support durant l'application des points de colle. La lentille est alors replacée ensuite à sa position ajustée pour le séchage ou la polymérisation de ces points de colle.

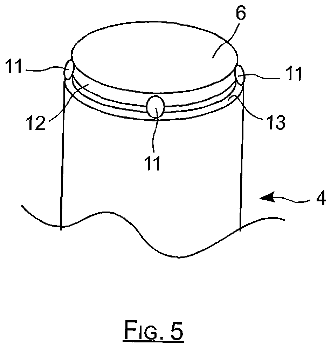

Comme représenté en figure 5, l'organe support présente avantageusement une extrémité tubulaire de diamètre sensiblement supérieur au diamètre externe de la lentille 6. Les gouttes de colles sont alors appliquées pour relier le bord périphérique 12 de la lentille 6 au bord supérieur circulaire 13 de l'extrémité tubulaire de l'organe support 4.

Comme on le comprend, au moins trois zones de collage sont nécessaires pour assurer la fixation et le maintien de la lentille 6, mais quatre points de colle 11 peuvent très bien être appliqués, comme dans l'exemple de la figure 5, ces points étant régulièrement répartis le long de la périphérie de la lentille.

L'application de ces points de colle peut être assurée manuellement par un opérateur spécialisé. Avantageusement, cette application peut également être réalisée de manière automatisée, en utilisant un dispositif d'application de gouttes de colles automatisé. Ce dispositif comporte par exemple une seringue dont le poussoir est commandé en déplacement, et dont la buse est située en vis-à-vis du bord de lentille lorsque cette lentille est en place.

La lentille 6 est ensuite maintenue par les moyens asservis à sa position ajustée jusqu'à la fin du séchage des gouttes de colle. Ce séchage peut avantageusement être maîtrisé dans le temps et/ou accéléré en appliquant un flux lumineux ou autre, au moyen par exemple de lampes à ultra-violets, la colle étant alors choisie pour sécher sous l'effet des rayonnements ultra-violets.

En ce qui concerne le choix de la colle, on utilise une colle présentant une viscosité suffisante pour former des gouttes à même de combler localement l'espace séparant le pourtour de la lentille du bord supérieur de l'organe de support. Eventuellement, chaque point de collage peut être formé de plusieurs gouttes déposées successivement.

Par ailleurs, la colle est choisie pour avoir un coefficient de dilatation thermique le plus faible possible, pour que les variations de température auxquelles est soumis l'appareil en fonctionnement ne provoquent pas de déplacement de la lentille susceptible de dégrader la focalisation du rayon laser ou de changer son orientation.

Il est à noter que dans l'exemple illustré sur les figures, la diode est d'abord fixée à l'organe support, après quoi la position de la lentille est ajustée par rapport à l'organe support pour ajuster la focalisation et l'orientation du rayon laser, mais il est également possible de procéder à l'inverse.

Dans ce cas, la lentille est d'abord fixée à l'organe de support, et la diode est fixée à une embase, ayant par exemple une forme circulaire analogue à celle de la carte de circuit imprimé repérée par 5 dans les figures, pour constituer un élément manipulable comportant une diode. Les moyens asservis sont alors utilisés pour saisir l'élément ainsi constitué, et pour le déplacer afin déterminer la position ajustée de cette diode, pour que le rayon laser soit correctement focalisé, et orienté correctement. L'embase peut alors être fixée au bord inférieur de l'organe support, par collage, de la même manière que dans l'exemple illustré sur les figures.

Autrement dit, dans l'exemple des figures, l'élément dont la position est ajustée durant le montage est la lentille, la diode ayant préalablement été fixée à cet organe support, mais l'élément dont la position est ajustée durant le montage peut également être une embase à laquelle la diode a préalablement été fixée, la lentille ayant été fixée préalablement à l'organe de support dans une étape préalable à l'ajustement et la fixation de l'embase.

## Revendications

1. Procédé de montage sur un organe de support (4) d'un niveau électronique à rayon laser, ce niveau électronique à rayon laser comprenant une carte de mesure d'horizontalité (2) et deux éléments (5, 6) comportant un élément (6) de type lentille de collimation (6) et un élément (5) incluant une diode laser (3), dans lequel l'un de ces éléments (5, 6) est monté sur l'organe support (4) à une position ajustée après fixation de l'autre élément (5, 6) à cet organe support (4), un rayon laser (9) étant généré par la diode laser (3) selon une direction oblique par rapport à la verticale lorsque la carte de mesure d'horizontalité (2) détecte qu'elle est horizontale, la position ajustée étant choisie pour que :
- la distance de la lentille de collimation (6) à la diode laser (3) procure une focalisation optimale du rayon laser (9) traversant la lentille de collimation (6),
- lorsque la carte de mesure d'horizontalité (2) détecte qu'elle est horizontale, l'emplacement de la lentille de collimation (6) par rapport à la diode laser (3) dans un plan (P) normal à une direction verticale (AP) par rapport au dispositif (1) procure une orientation du rayon laser (9) selon une direction verticale (AP) ce procédé comportant :
- une opération de détermination de la position ajustée de l'élément (5, 6) en utilisant des moyens de déplacement de cet élément (5, 6) asservis sur la focalisation et l'orientation du rayon laser (9), l'élément (5, 6) étant espacé de l'organe de support (4) lorsqu'il occupe sa position ajustée ;
- une opération d'application de colle (11) reliant le pourtour de l'élément (5, 6) à l'organe de support (4) ;
- une opération de séchage de la colle (11) pendant que l'élément (5, 6) est maintenu à sa position ajustée par les moyens asservis,
l'opération d'ajustement de la position de l'élément (5, 6) comportant une première étape d'ajustement de la distance séparant la lentille de collimation (6) de la diode laser (3) qui est asservie sur la focalisation du rayon laser (9), suivie par une seconde étape d'ajustement de la position de l'élément (5, 6) dans un plan (P) normal à la direction verticale qui est asservie sur l'orientation du rayon laser (9).

2. Procédé selon la revendication 1, dans lequel l'élément (5, 6) est fixé à une extrémité tubulaire de l'organe support (4), cette extrémité tubulaire ayant un diamètre sensiblement supérieur au diamètre de l'élément (5, 6), la colle (11) étant appliquée pour s'étendre depuis le pourtour de l'élément (5, 6) jusqu'au bord circulaire de l'extrémité tubulaire de l'organe de support (4).

3. Procédé selon l'une des revendications 1 ou 2, dans lequel l'opération d'application de la colle (11) est assurée avec un dispositif automatisé comportant une seringue ayant son poussoir asservi en déplacement.

4. Procédé selon l'une des revendications 1 à 3, dans lequel l'opération de séchage de la colle (11) est réalisée en dirigeant vers la colle (11) préalablement appliquées un rayonnement lumineux pour la sécher ou la polymériser.

5. Procédé selon l'une des revendications précédentes, dans lequel la colle est appliquée sous forme de gouttes, pour relier le pourtour de l'élément (5, 6) à l'organe de support (4), au niveau d'au moins trois zones distinctes.

6. Niveau électronique à rayon laser (1) comprenant une carte de mesure d'horizontalité (2), un élément (5) incluant une diode laser (3) et un élément de type lentille (6) de collimation du rayonnement émis par cette diode laser (3), et un organe de support (4) portant ces deux éléments (5, 6), dans lequel l'un de ces éléments (5, 6) est espacé de l'organe de support (4) tout en étant fixé à cet organe de support (4) au moyen de colle (11) reliant cet élément (5, 6) à l'organe de support (4) de manière à ce que, lorsque la carte de mesure d'horizontalité (2) détecte qu'elle est horizontale, la diode laser (3) émet un rayonnement oblique par rapport à la verticale et la lentille (6) de collimation procure une orientation du rayon laser (9) selon une direction verticale (AP).

## Patentansprüche

1. Verfahren zur Montage eines elektronischen Nivelliergeräts mit Laserstrahl an einem Trägerorgan (4), wobei dieses elektronische Nivelliergerät mit Laserstrahl eine Karte (2) zum Messen der Horizontalität sowie zwei Elemente (5, 6) enthält, die ein Element (6) vom Typ Kollimationslinse (6) und ein Element (5) umfassen, das eine Laserdiode (3) einschließt, bei dem eines dieser Elemente (5, 6) an dem Trägerorgan (4) in einer Position angebracht ist, die nach Befestigung des anderen Elements (5, 6) an diesem Trägerorgan (4) angepasst wird, wobei ein Laserstrahl (9) mittels der Laserdiode (3) in einer in Bezug auf die Vertikale schrägen Richtung erzeugt wird, wenn die Karte zum Messen der Horizontalität (2) erfasst, dass sie horizontal ist, wobei die angepasste Position gewählt wird, damit:
- der Abstand der Kollimationslinse (6) zur Laserdiode (3) für eine optimale Bündelung des durch die Kollimationslinse (6) hindurchgehenden Laserstrahls (9) sorgt,
- wenn die Karte (2) zum Messen der Horizontalität erfasst, dass sie horizontal ist, die Anordnung der Kollimationslinse (6) in Bezug auf die Laserdiode (3) in einer Ebene (P), die senkrecht zu einer vertikalen Richtung (AP) in Bezug auf die Vorrichtung (1) ist, für eine Ausrichtung des Laserstrahls (9) in einer vertikalen Richtung (AP) sorgt, wobei dieses Verfahren umfasst:
- einen Vorgang zur Bestimmung der angepassten Position des Elements (5, 6), indem Mittel zur Verschiebung dieses Elements (5, 6) verwendet werden, die auf die Bündelung und die Ausrichtung des Laserstrahls (9) geregelt werden, wobei das Element (5, 6) zu dem Trägerorgan (4) beabstandet ist, wenn es seine angepasste Position einnimmt;
- einen Vorgang zum Auftragen eines Klebstoffes (11), der den Umfang des Elements (5, 6) mit dem Trägerorgan (4) verbindet;
- einen Vorgang zum Trocknen des Klebstoffes (11), während das Element (5, 6) durch die Regelungsmittel in seiner angepassten Position gehalten wird,
wobei der Vorgang zum Anpassen der Position des Elements (5, 6) einen ersten Schritt des Anpassens des Abstandes umfasst, der die Kollimationslinse (6) von der Laserdiode (3) trennt, die auf die Bündelung des Laserstrahls (9) geregelt wird, gefolgt von einem zweiten Schritt des Anpassens der Position des Elements (5, 6) in einer zur vertikalen Richtung senkrechten Ebene (P), die auf die Ausrichtung des Laserstrahls (9) geregelt wird.

2. Verfahren nach Anspruch 1, bei dem das Element (5, 6) an einem rohrförmigen Ende des Trägerorgans (4) befestigt ist, wobei dieses rohrförmige Ende einen Durchmesser hat, der im Wesentlichen größer als der Durchmesser des Elements (5, 6) ist, wobei der Klebstoff (11) aufgetragen wird, um sich von dem Umfang des Elements (5, 6) bis zum kreisförmigen Rand des rohrförmigen Endes des Trägerorgans (4) zu erstrecken.

3. Verfahren nach einem der Ansprüche 1 oder 2, bei dem der Vorgang des Auftragens des Klebstoffes (11) mit einer automatisierten Vorrichtung sichergestellt wird, die eine Spritze umfasst, deren Kolben bewegungsgeregelt ist.

4. Verfahren nach einem der Ansprüche 1 bis 3, bei dem der Vorgang des Trocknens des Klebstoffes (11) realisiert wird, indem in Richtung des zuvor aufgetragenen Klebstoffes (11) eine Lichtstrahlung gerichtet wird, um ihn zu trocknen oder zu polymerisieren.

5. Verfahren nach einem der vorhergehenden Ansprüche, bei dem der Klebstoff in Form von Tropfen aufgetragen wird, um den Umfang des Elements (5, 6) mit dem Trägerorgan (4) im Bereich von mindestens drei unterschiedlichen Zonen zu verbinden.

6. Elektronisches Nivelliergerät (1) mit Laserstrahl, umfassend eine Karte zum Messen der Horizontalität (2), ein Element (5), das eine Laserdiode (3) einschließt, und ein Element vom Typ Kollimationslinse (6) zur Bündelung der von dieser Laserdiode (3) ausgesandten Strahlung sowie ein Trägerorgan (4), das diese beiden Elemente (5, 6) trägt, bei dem eines dieser Elemente (5, 6) zu dem Trägerorgan (4) beabstandet ist, während es an diesem Trägerorgans (4) mittels Klebstoff (11) befestigt ist, der dieses Element (5, 6) mit dem Trägerorgan (4) derart verbindet, dass, wenn die Karte zum Messen der Horizontalität (2) erfasst, dass sie horizontal ist, die Laserdiode (3) eine in Bezug auf die Vertikale schräge Strahlung aussendet und die Kollimationslinse (6) für eine Ausrichtung des Laserstrahls (9) in einer vertikalen Richtung (AP) sorgt.

## Claims

1. Method for mounting an electronic laser beam level onto a support member (4), said electronic laser beam level comprising a horizontality measurement board (2) and two elements (5, 6) comprising one element (6) of the collimation lens (6) type and one element (5) including a laser diode (3), wherein one of said elements (5, 6) is mounted onto the support member (4) at a position that is adjusted after the other element (5, 6) is attached to said support member (4), a laser beam (9) being generated by the laser diode (3) in a direction that is oblique relative to the vertical when the horizontality measurement board (2) detects that it is horizontal, the adjusted position being selected so that:
- the distance from the collimation lens (6) to the laser diode (3) provides optimal focusing of the laser beam (9) passing through the collimation lens (6);
- when the horizontality measurement board (2) detects that it is horizontal, the location of the collimation lens (6) relative to the laser diode (3) in a plane (P) normal to a vertical direction (AP) relative to the device (1) provides an orientation of the laser beam (9) in a vertical direction (AP), said method comprising:
- an operation for determining the adjusted position of the element (5, 6) using means for displacing said element (5, 6) that control the focusing and the orientation of the laser beam (9), the element (5, 6) being spaced apart from the support member (4) when it occupies its adjusted position;
- an operation for applying glue (11) connecting the periphery of the element (5, 6) to the support member (4);
- an operation for drying the glue (11) while the element (5, 6) is held in its adjusted position by the control means,
the operation for adjusting the position of the element (5, 6) comprising a first step of adjusting the distance separating the collimation lens (6) from the laser diode (3) that controls the focusing of the laser beam (9), followed by a second step of adjusting the position of the element (5, 6) in a plane (P) normal to the vertical direction that controls the orientation of the laser beam (9).

2. Method according to claim 1, wherein the element (5, 6) is attached to a tubular end of the support member (4), said tubular end having a diameter that is substantially greater than the diameter of the element (5, 6), the glue (11) being applied in order to extend from the periphery of the element (5, 6) to the circular edge of the tubular end of the support member (4).

3. Method according to claim 1 or claim 2, wherein the operation for applying glue (11) is provided by an automated device comprising a syringe having a displacement-controlled plunger.

4. Method according to one of claims 1 to 3, wherein the operation for drying glue (11) is carried out by directing light radiation towards the previously applied glue (11) in order to dry or polymerise the glue.

5. Method according to one of the preceding claims, wherein the glue is applied in the form of drops in order to connect the periphery of the element (5, 6) to the support member (4), on at least three distinct zones.

6. Electronic laser beam level (1) comprising a horizontality measurement board (2), an element (5) including a laser diode (3) and an element of the lens (6) type for collimating the radiation emitted by said laser diode (3), and a support member (4) supporting said two elements (5, 6), wherein one of said elements (5, 6) is spaced apart from the support member (4) whilst being attached to said support member (4) by means of glue (11) connecting said element (5, 6) to the support member (4), so that, when the horizontality measurement board (2) detects that it is horizontal, the laser diode (3) emits radiation that is oblique relative to the vertical and the collimation lens (6) provides an orientation for the laser beam (9) in a vertical direction (AP).
